# EUROPEAN PATENT APPLICATION

(11) **EP 4 443 367 A1**
(43) Date of publication of application: **09.10.2024**
(21) Application number: 23199529.1
(22) Date of filing: 25.09.2023
(51) Int. Cl.: G06Q 30/00

(54) **METHOD FOR CONSTRUCTING BUSINESS MANAGEMENT MODEL**

(30) Priority: 08.04.2023 CN 202310368044
(71) Applicant: Wen, Xingyi, Guizhou 557500 (CN)
(72) Inventor: Wen, Xingyi, Guizhou 557500 (CN)
(74) Representative: Cabinet Chaillot

(57) **Abstract**

The invention discloses a method for constructing a business management model, wherein the participants include the method provider, the supermarket owner and the customer; the method provider provides a money-making plan to the supermarket owner, and the customer pays the membership fee to become a member of the supermarket, then the supermarket owner divides a part of the collected membership fee as a commission or discount to the method provider; the method provider gets remuneration, the supermarket owner gets capital income, and the customer enjoys discounts on supermarket products after becoming a member of the supermarket. The advantages of the invention compared with prior art are: the method steps are reasonable and complete; the method provider, the supermarket owner and the customer form a triangular relationship in this plan; the method provider gets remuneration, the supermarket owner gets capital income, and the customer enjoys discounts on supermarket products after becoming a member of the supermarket. The invention has good applicability and is easy to promote.

## Description

### FIELD OF THE INVENTION

The invention relates to the field of business model management, in particular to a method for constructing a business management model.

### BACKGROUND OF THE RELATED ART

Business management is a general term for a series of activities such as planning, organizing, directing, coordinating and controlling the production and operation activities of businesses, and is an objective requirement of socialized mass production; business management is to make full use of the human, material, financial, information and other resources of the business as much as possible to achieve the goal of more, faster, better and less, and to achieve the greatest input-output efficiency; however, businesses without a correct business model will eventually lead to debts and cannot turn losses into profits, which is not conducive to the long-term development of businesses.

### SUMMARY OF THE INVENTION

The technical problem to be solved by the invention is to provide a method for constructing a business management model.

In order to solve the above technical problems, the technical solutions provided by the invention are: a method for constructing a business management model, wherein the participants include the method provider, the supermarket owner and the customer; the method provider provides a money-making plan to the supermarket owner, and the customer pays the membership fee to become a member of the supermarket, then the supermarket owner divides a part of the collected membership fee as a commission or discount to the method provider; the method provider gets remuneration, the supermarket owner gets capital income, and the customer enjoys discounts on supermarket products after becoming a member of the supermarket.

The advantages of the invention compared with prior art are: the method steps are reasonable and complete; the method provider, the supermarket owner and the customer form a triangular relationship in this plan; the method provider gets remuneration, the supermarket owner gets capital income, and the customer enjoys discounts on supermarket products after becoming a member of the supermarket. The invention has good applicability and is easy to promote.

### BRIEF DESCRIPTION OF THE INVENTION

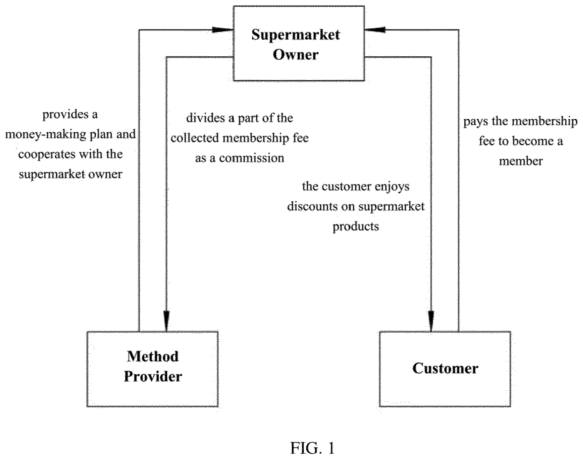

fig. 1 is a schematic diagram of the architecture according to the invention.

### DETAILED DESCRIPTION OF THE PREFERRED EMBODIMENTS

The invention will be further described in detail hereinafter with reference to the drawings.

When the invention is in specific implementation, as shown in FIG. 1, the participants include the method provider, the supermarket owner and the customer; the method provider provides a money-making plan to the supermarket owner, and the customer pays the membership fee to become a member of the supermarket, then the supermarket owner divides a part of the collected membership fee as a commission or discount to the method provider; the method provider gets remuneration, the supermarket owner gets capital income, and the customer enjoys discounts on supermarket products after becoming a member of the supermarket.

In one embodiment of the invention, the working principle of the invention: the method provider provides a money-making plan to the supermarket owner, and the customer pays 30 Yuan to become a member of the supermarket. The supermarket owner uses 10 Yuan of the 30 Yuan membership fee as remuneration (or commission, discount) to the method provider, and the supermarket owner earns 20 Yuan. Customers who pay a membership fee of 30 Yuan to become a member can enjoy shopping discounts in the supermarket in the supermarket, which can realize three-party profits. Members pay 30 Yuan to the supermarket to become a member. The membership card is valid for one year, and any products that the member buys in the supermarket within one year will be discounted. After the membership card expires in one year, the member can continue to use it after paying the membership fee. If the member does not renew the membership card, the member will automatically become an ordinary customer and will no longer get discounts when shopping in the supermarket. The membership fee of 30 Yuan is just a hypothesis: the development of various cities in some provinces and regions is different, and the price of membership fees may be different.

In one embodiment of the invention, as shown in FIG. 1, the participants involved in this solution are not limited to supermarket owners, but also owners of shopping malls; technical solutions involving business management models among method providers, supermarket owners (or shopping mall owners) and customers are all within the protection scope of this solution.

The above shows and describes the basic principles and main features of the invention and the advantages of the invention. Those skilled in the art should understand that the invention is not limited by the above embodiments. What are described in the above embodiments and description are only to illustrate the principles of the invention. On the premise of not departing from the spirit and scope of the invention, there will be various modifications and improvements in the invention, which shall all fall within the scope of the claimed invention. The protection scope of the invention is defined by the appended claims and the equivalents thereof.

## Claims

1. A method for constructing a business management model, wherein the participants include the method provider, the supermarket owner and the customer; the method provider provides a money-making plan to the supermarket owner, and the customer pays the membership fee to become a member of the supermarket, then the supermarket owner divides a part of the collected membership fee as a commission or discount to the method provider; the method provider gets remuneration, the supermarket owner gets capital income, and the customer enjoys discounts on supermarket products after becoming a member of the supermarket.
